# EUROPEAN PATENT APPLICATION

(11) **EP 3 593 757 A1**
(43) Date of publication of application: **15.01.2020**
(21) Application number: 18909389.1
(22) Date of filing: 27.11.2018
(51) Int. Cl.: A61C 19/05, A61C 13/007, A61C 13/34

(54) **TRY-IN TOOL AND DENTURE MANUFACTURING METHOD**

(30) Priority: 16.03.2018 JP 2018049788
(71) Applicant: Coredental Lab Yokohama Co., Ltd., Yokohama-shi, Kanagawa 233-0007 (JP); GC Corporation, Sunto-gun, Shizuoka 410-1307 (JP)
(72) Inventor: TAKIZAWA, Takuya, Yokohama-shi, Kanagawa 233-0007 (JP); YOSHIOKA, Masashi, Yokohama-shi, Kanagawa 233-0007 (JP); KUGA, Makoto, Yokohama-shi, Kanagawa 233-0007 (JP); MICHII, Takayuki, Tokyo 174-8585 (JP)
(74) Representative: Müller-Boré & Partner Patentanwälte PartG mbB
(86) International application number: PCT/JP2018/043522
(87) International publication number: WO 2019/176178

(57) **Abstract**

A try-in device including: a try-in base; and artificial teeth that are arranged on the try-in base, wherein the artificial teeth are commonly-available artificial teeth.

## Description

### Technical Field

The present disclosure relates to try-in devices and a method for producing dentures.

### Background Art

In recent years has been used an art of treating information on processes from design to production of dentures as data using CAD/CAM and cutting out dentures with a NC machine tool based on the data to finally obtaining dentures as disclosed in, for example, Patent Literature 1. According to this, dentures can be made with less processes than a conventionally applied lost wax casting technique more accurately for a shorter time than before.

When there is a natural tooth or a dental prosthesis which is to be opposite to a denture to be made and when occlusion has to be adjusted to a high degree, try-in is done for achieving proper occlusion. Adjustment is made based on results of this try-in and data on an end denture is obtained. Patent Literature 1 also describes a matter relating to try-in.

### Citation List

### Patent Literature

Patent Literature 1: JP 5932803 B2

### Summary of Invention

### Technical Problem

A conventional device for try-in (try-in device) is a temporary one that is an integrally formed try-in base and artificial teeth part which is cut out with CAD/CAM. Occlusion is adjusted by grinding teeth surfaces of such a temporary artificial teeth part. However, it is difficult to accurately reflect such adjustment of occlusion for a temporary artificial teeth part on artificial teeth arranged on an end denture, which may raise a problem with a state of occlusion of an end denture.

In contrast, the try-in device of Patent Literature 1 is formed of a separate try-in base and artificial teeth part which are cut out with CAD/CAM. However, it takes a lot of effort to make the try-in device as well as an end denture since the try-in device formed with CAD/CAM as described above is used for try-in and based on results thereof, a denture is further made with CAD/CAM etc.

An object of the present disclosure is thus to provide a try-in device that makes it possible to easily obtain a state of accurate occlusion of a finally obtained denture. The present disclosure also provides a method for producing a denture using this try-in device.

### Solution to Problem

One aspect of the present disclosure is a try-in device to adjust a state of occlusion of a denture, the try-in device comprising: a try-in base; and artificial teeth that are arranged on the try-in base, wherein the artificial teeth are commonly-available artificial teeth.

Here, "commonly-available artificial teeth" mean commercially available artificial teeth that are given occlusal surfaces in advance and are made from resin, ceramics, or the like. "Commonly-available artificial teeth" may also include what in the form of artificial teeth that are made by practitioners from existing filler-free acrylic resin (such as PMMA (polymethyl methacrylate)) artificial teeth, wax and pattern resin for making it easier to adjust occlusion.

Another aspect of the present disclosure is a method for producing a denture, the method comprising: making the try-in device; obtaining digital data on a shape of the try-in device after occlusion of the artificial teeth of the try-in device is adjusted; making a denture base based on the digital data; and arranging the artificial teeth arranged on the try-in device, on the denture base.

Yet another aspect of the present disclosure is a method for producing a denture, the method comprising: making the try-in device; obtaining digital data on a shape of the try-in device after occlusion of the artificial teeth of the try-in device is adjusted; making a denture base and other artificial teeth based on the digital data; and arranging the other artificial teeth on the denture base.

### Advantageous Effects of Invention

According to the present disclosure, adjustment of occlusion is easily and accurately reflected on a denture without making a try-in device using CAD/CAM since occlusion is adjusted with a try-in device using commonly-available artificial teeth that are prepared in advance and these artificial teeth are directly used for a denture or other artificial teeth are made based on results of adjustment of occlusion using these artificial teeth.

### Brief Description of Drawings

Fig. 1 is a side view of a try-in device 10.
Fig. 2 is a front view of the try-in device 10.
Fig. 3 is a side view of a denture 20.
Fig. 4 is a front view of the denture 20.
Fig. 5 is a plan view of the denture 20 on an artificial dentition 22 side.
Fig. 6 is a plan view of a denture base 21 on recess parts 21b side.
Fig. 7 shows an external appearance of an artificial tooth 23.
Fig. 8 is a conceptual block diagram of a design apparatus 30.
Fig. 9 is a flowchart of a method S10 for producing a denture.
Fig. 10 is a flowchart of step S15 of making a denture.
Fig. 11 is a flowchart of a method S20 for producing a denture.
Fig. 12 is a flowchart of step S25 of making a denture.

### Description of Embodiments

Each embodiment will be described below based on the drawings. The present invention is not limited to these embodiments.

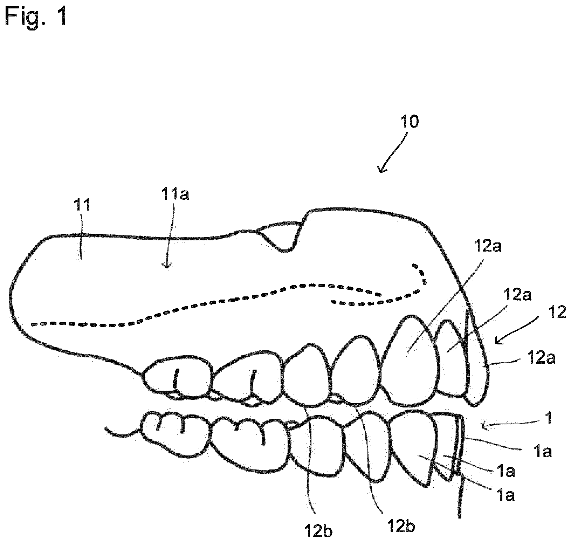

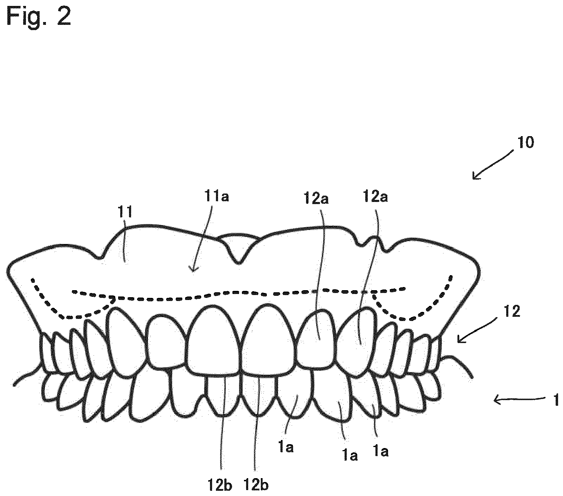

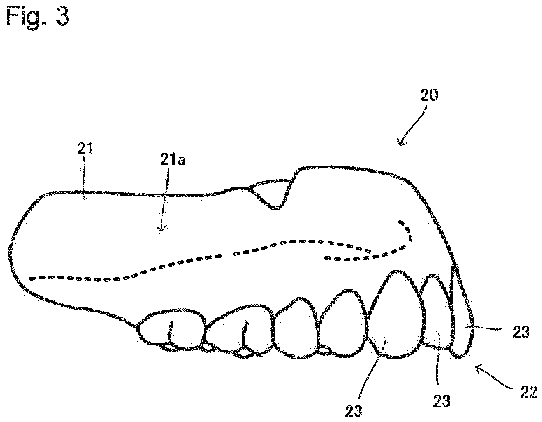

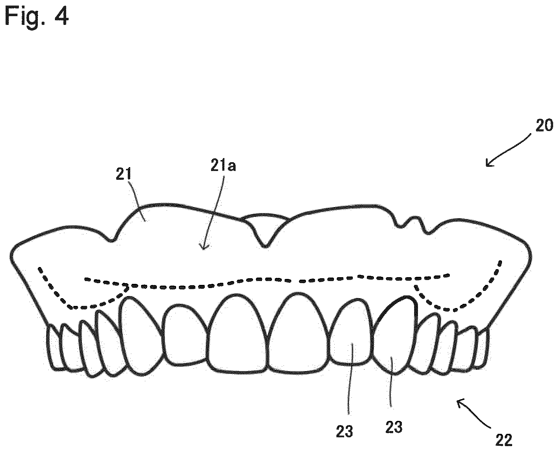

Fig. 1 is a view illustrating one embodiment and shows a try-in device 10. Fig. 1 is a side view of the try-in device 10 and Fig. 2 is a front view of the try-in device 10. This embodiment is the try-in device 10 for upper jaws for a denture 20 for upper jaws (see Figs. 3 and 4). Figs. 1 and 2 also show natural dentition 1 composed of natural teeth 1a. The try-in device 10 is a tool made and used for try-in. A denture is made based on results of adjustment of occlusion with the try-in device 10.

The try-in device 10 is composed of a try-in base 11 and a dentition part 12.

The try-in base 11 is a portion having a shape corresponding to a denture base 21 of the denture 20 (see Figs. 3 to 6). Therefore, the dentition part 12 is formed on one face of the try-in base 11 and a recess part 11a that corresponds to a shape of an intraoral alveolar ridge crest is formed over the other face thereof as shown by the dashed lines.

Constituent material of the try-in base 11 is not specifically limited. Examples thereof include wax. The try-in base 11 may be made from resin or the like for its stable shape.

The dentition part 12 is a portion to correspond to artificial dentition 22 of the denture 20 (see Figs. 3 to 5). A plurality of artificial teeth 12a are arranged on and form a dental arch on the try-in base 11 to be the dentition part 12. The artificial teeth 12a include occlusal surfaces 12b.

Here, commonly-available artificial teeth that are prepared in advance are used as the artificial teeth 12a of this embodiment. That is, the artificial teeth 12a that are also available for the artificial teeth 23 of the denture 20, which is finally made, are used for the try-in device 10 of this embodiment.

According to the try-in device 10 as described above, a state of occlusion is adjusted by, for example, grinding the artificial teeth 12a of the try-in device 10 as described later and these artificial teeth 12a can be also used as the artificial teeth 23 of the denture 20 as they are ("producing method S10" to be shown later). Thus, in this case, due to commonly-available artificial teeth that are prepared in advance, the try-in device can be easily made without CAD/CAMs and also a state of adjusted occlusion is accurately reflected on the denture 20, which makes it possible to obtain a state of good occlusion.

On the other hand, a state of occlusion is adjusted by, for example, grinding the artificial teeth 12a of the try-in device 10 and based on this, other artificial teeth may be made to be the artificial teeth 23 of the denture 20 as well ("producing method S20" to be shown later). In this case as well, since commonly-available artificial teeth that are prepared in advance are used for the try-in device, the try-in device can be easily made without CAD/CAM and also a state of adjusted occlusion is accurately reflected on the denture 20, which makes it possible to obtain a state of good occlusion. In addition, in this case, material of artificial teeth can be selected according to diagnosis information and a treatment stage.

This embodiment is not necessarily limited to the above described try-in device 10 on the upper jaw side, may be a try-in device on the lower jaw side and may be a try-in device on both upper and lower jaws sides.

Next, a method for making the denture 20 using the try-in device 10 will be described. The denture 20 in this embodiment is a denture to be arranged on the upper jaw side.

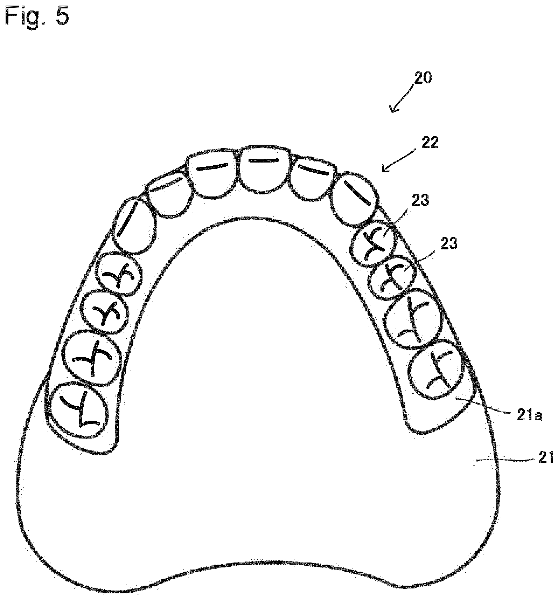

Fig. 3 is a side view of the denture 20, Fig. 4 is a front view of the denture 20 and Fig. 5 is a plan view of the denture 20 on the artificial dentition 22 side. The denture 20 like them is arranged in a patient's oral cavity and artificially compensates for lost natural teeth.

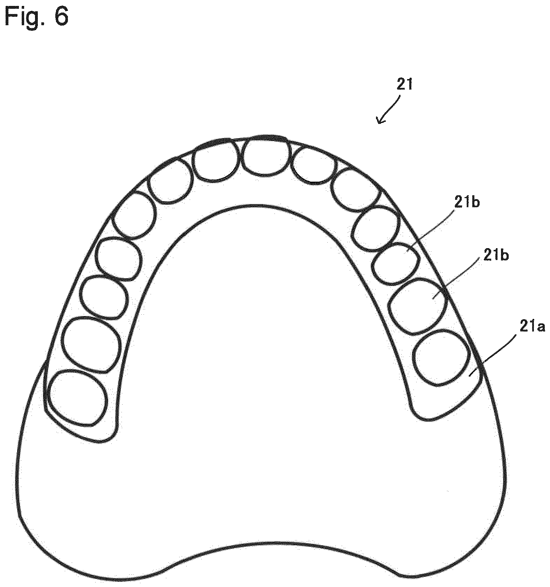

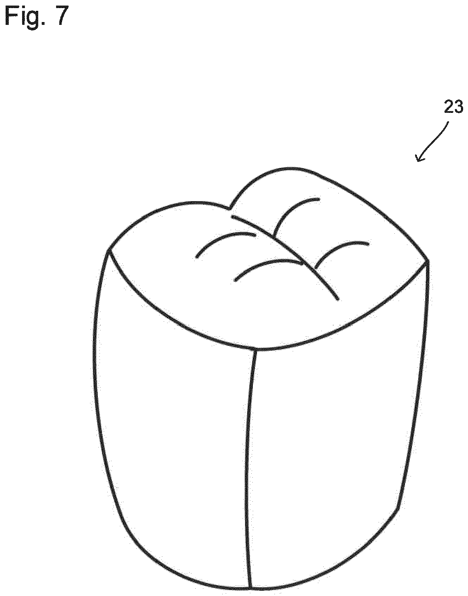

As can be seen from Figs. 3 to 5, the denture 20 is composed of the denture base 21 and the artificial dentition 22 of arranging a plurality of the artificial teeth 23. Fig. 6 shows the denture base 21 and Fig. 7 shows the external appearance of one artificial tooth 23 according to one example.

The denture base 21 is a member that has functions of holding the artificial teeth 23 at a predetermined position and of stably fitting the denture 20 onto an oral mucosa. In this embodiment, as can be seen from Fig. 6, a ridge part 21a that rises like a ridge is included as a portion where the artificial teeth 23 are arranged and also, recess parts 21b to each of which one end of respective artificial teeth 23 is inserted to fix the artificial teeth 23 are provided for the crest of this ridge part 21a.

Since the denture base 21 is made by cutting as described later, preferred examples of material thereof include hard materials such as general base resin materials (acrylic resins), resin materials containing filler and crosslinker or the like, engineering plastics, metals and sintered ceramics.

The artificial teeth 23 are artificial teeth that are made so as to have functions of lost natural teeth instead of the lost natural teeth. One end of respective artificial teeth 23 is inserted into each of the recess parts 21b of the denture base 21 and the artificial teeth 23 are fixed with an adhesive, whereby the artificial teeth 23 are held. A plurality of the artificial teeth 23 are thereby arranged arcuately like dentition to be the artificial dentition 22, which makes it possible therefor to function as natural teeth.

These artificial teeth 23 may be either the artificial teeth 12a that are used for the try-in device 10 ("producing method S10" to be shown later) or other artificial teeth that are made based on results of try-in using the try-in device 10 that includes the artificial teeth 12a ("producing method S20" to be shown later) according to difference in a method for producing the denture 20.

Any known material used for artificial teeth may be employed for the artificial teeth 23. Examples thereof include ceramics, resins, hard resins and metals.

Any known material may be used as material with which the artificial teeth 23 are adhered to the denture base 21. Examples thereof include known industrial adhesives such as quick cure resins, gingival color resins, denture base resins and epoxy adhesives, or combination thereof.

Here, a means for preventing the artificial teeth 23 from rotating when the artificial teeth 23 are arranged on the denture base 21 may be provided for the artificial teeth 23. Examples thereof include an aspect of providing a noncircular protrusion for the artificial teeth 23 and providing a hole into which this protrusion is inserted on the recess parts 21b side.

Next, a method for producing the denture 20 will be described.

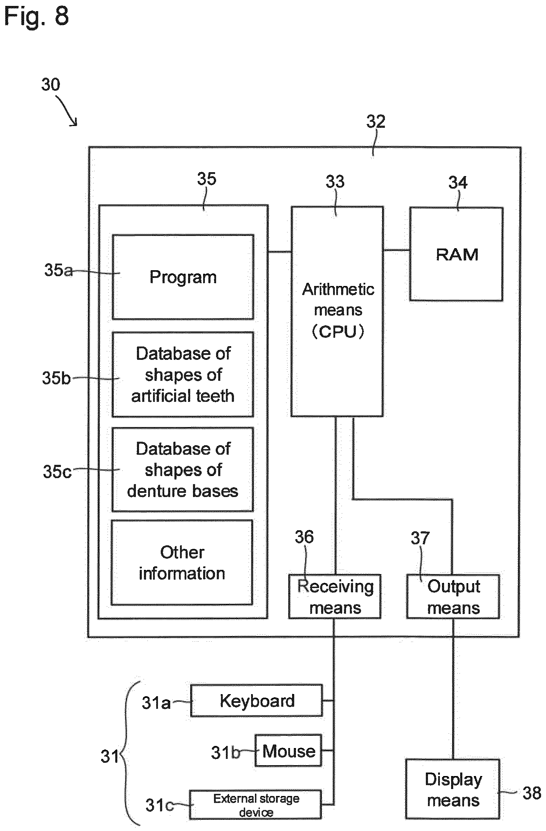

Fig. 8 is a conceptual block diagram of a configuration included in a design apparatus 30 for dentures according to one embodiment. The design apparatus 30 for dentures (hereinafter may be referred to as "design apparatus 30") includes input means 31, an arithmetic unit 32 and display means 38. The arithmetic unit 32 includes arithmetic means 33, RAM 34, memory means 35, receiving means 36 and output means 37. The input means 31 includes a keyboard 31a, a mouse 31b and an external storage device 31c that operates as one storage medium.

The arithmetic means 33 is configured by a so-called central processing unit (CPU). The arithmetic means 33 is means that is connected to and can control each of the above described components. The arithmetic means 33 also executes varieties of programs 35a stored in, for example, the memory means 35 that operates as a storage medium and based on this, carries out arithmetic operations as means for generating varieties of data and for selecting data which will be described later.

The RAM 34 is a component operating as a working area for the arithmetic means 33 and as memory means for temporary data. The RAM 34 may be configured by SRAM, DRAM, a flash memory or the like and is the same as known RAM.

The memory means 35 is a component operating as a storage medium in which programs and data that are the bases of varieties of arithmetic operations are saved. It may be possible to save varieties of intermediate and final results obtained by execution of programs in the memory means 35. More specifically, a program 35a, a database of shapes of artificial teeth 35b and a database of shapes of denture bases 35c are stored (saved) in the memory means 35. Other pieces of information may be saved therein together as well.

The program 35a is a program necessary for operating the design apparatus 30 and is not specifically limited.

The database of shapes of artificial teeth 35b is a database in which information including shapes concerning artificial teeth are stored. Types of shapes of artificial teeth stored in the database are not especially limited. The database may have an aspect of storing data on a plurality of artificial teeth in a state where upper and lower dental arches each of which includes a group of artificial teeth occlude each other. This data may be configured so as to be treated by the artificial tooth and in addition, by the divided unit including some artificial teeth.

Plural variations of such groups of artificial teeth for matching patients' characteristics such as "sex" and "physique" are preferably prepared.

An embodiment of means for regulating rotation as described above may be also stored in the database of shapes of artificial teeth 35b.

The database of shapes of denture bases 35c is a database in which information including shapes concerning denture bases are stored. Aspects of data concerning denture bases stored in this database are not especially limited. For example, data on a denture base in a state where "only an upper half including a portion where artificial teeth are to be fit" is arranged in the positional relationship with data on occluded artificial teeth (for example, with a space of 0.1 mm to 0.5 mm for adhesion) may be stored.

The data preferably includes 3 to 4 variations in the size in combination with artificial teeth, according to sizes of the artificial teeth.

An embodiment of means for regulating rotation of fitted artificial teeth may be also stored in the database of shapes of denture bases 35c.

The receiving means 36 is a component which has a function for properly taking external information into the arithmetic unit 32 and to which the input means 31 is connected. The receiving means 36 includes a so-called input port, input connector, etc.

The output means 37 is a component which has a function of externally outputting information that is to be externally outputted among obtained results properly and to which the display means 38 such as a monitor, and varieties of devices are connected. The output means 37 includes a so-called output port, output connector, etc.

The input means 31 includes, for example, the keyboard 31a, the mouse 31b and the external storage device 31c. Known ones may be employed for the keyboard 31a and the mouse 31b and the description thereof is omitted.

The external storage device 31c is known externally-connectable storage means and operates as a storage medium as well. Varieties of necessary programs and data may be stored in the external storage device 31c without any limitation. For example, the program and data which are the same as stored in the memory means 35 may be stored in the external storage device 31c. Data on impressions, occlusion, etc. which are the bases when the arithmetic unit 32 generates data may be also stored in the external storage device 31c.

A known device may be employed for the external storage device 31c. Examples thereof include CD-ROM, a CD-ROM drive, DVD, a DVD drive, a hard disk, and various kinds of memories.

In addition, information may be provided for the arithmetic unit 32 via the receiving means 36 by networks or communications. Information may also be sent to external devices (for example, a NC machine tool) via the output means 37 by networks or communications.

According to the design apparatus 30, a denture base may be directly cut out, which makes it possible to make a denture without complicated steps as included in the lost wax casting technique.

Next, the method S10 for producing the try-in device 10 and the denture 20 according to the first embodiment (which may be referred to as "producing method S10") will be described. While described with an example of using the design apparatus 30 here for understandability, the producing method S10 is not limited thereto and can be carried out with another apparatus as long as such an apparatus can realize the method including the spirit below.

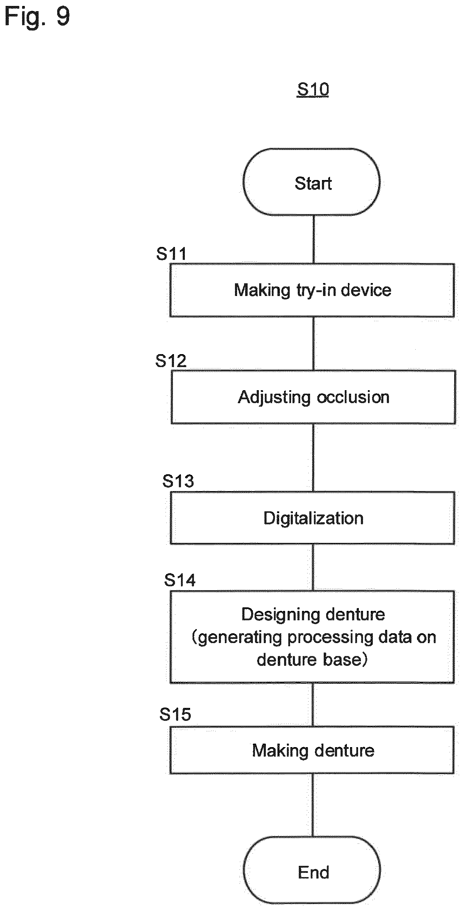

Fig. 9 shows a flow of the producing method S10. As can be seen from this, the producing method S10 includes step S11 of making a try-in device, step S12 of adjusting occlusion, step S13 of digitization, step S14 of designing a denture and step S15 of making a denture. Hereinafter each step will be described.

This embodiment is an example of using the artificial teeth 12a, which are used for the try-in device 10, for the artificial teeth 23 to be used for the denture 20.

Step S11 is a step of making the try-in device 10. Specifically, a plaster cast of an impression that is obtained by impression taking is made and a bite plate that is to be a try-in base is made by applying wax to the plaster cast. The artificial teeth 12a are arranged on this bite plate made of wax to make the try-in device 10.

Step S12 is a step of adjusting occlusion. Specifically, the try-in device 10 obtained in step S11 is arranged in a patient's oral cavity or an articulator to adjust occlusion. Occlusion is adjusted as usual. For example, occlusion is adjusted by grinding the occlusal surfaces 12b or by moving the artificial teeth 12a.

Step S13 is a step of obtaining CAD data of the try-in device 10 from the try-in device 10 obtained in step S12, for which occlusion is adjusted. A method of obtaining CAD data can be carried out with a known apparatus. Examples thereof include a three-dimensional optical scanner.

Step S14 is a step of determining a shape of the denture 20 to be made based on the data of digitization obtained in step S13. Specifically, a shape of a denture is determined on data according to the data obtained in step S13 and databases stored in the design apparatus 30. At this time, a position of artificial teeth is determined on the basis of side faces of an artificial teeth part (unadjusted part) on the data obtained in step S13 and for this, a shape of a connection part (recess parts 21b, socket part) of the artificial teeth to a denture base is determined at the same time.

In step S14, the data on artificial teeth part is deleted from the determined data on a denture based on data on artificial teeth saved in the database of shapes of artificial teeth 35b (see Fig. 8), processing data for cutting a denture base is generated and this processing data is outputted to step S15 of making a denture (machine tool).

Each arithmetic operation carried out in step S14 in this embodiment is executed in the design apparatus 30. That is, the arithmetic means 33 executes arithmetic operations according to the program 35a that is saved in the memory device 35 included in the design apparatus 30 to progress each arithmetic operation carried out in step S14 in this embodiment. Therefore, varieties of shapes treated here exist as data and are treated as data.

Step S15 is a step of receiving the processing data for a denture which is outputted in step S14 to a machine tool, cutting out the shape and finishing as the denture 20.

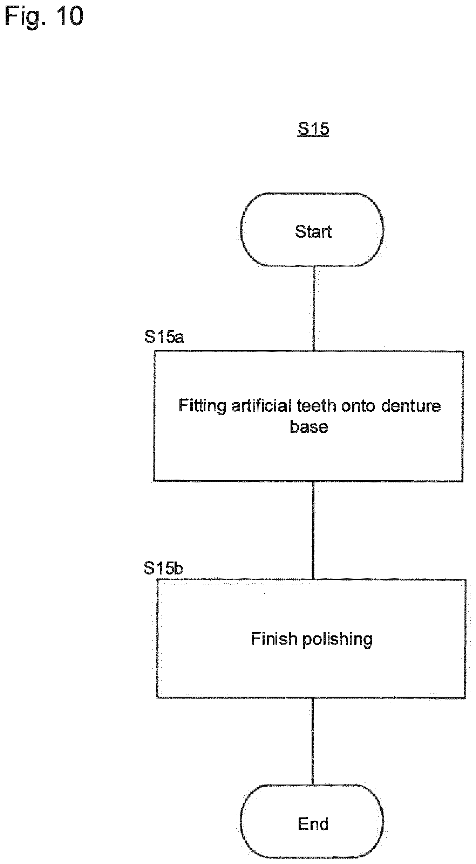

Fig. 10 shows a flow of step S15. As can be seen from Fig. 10, step S15 includes step S15a of fitting artificial teeth onto a denture base and step S15b of finish polishing.

Here, a known one may be used as the machine tool without any specific limitation and step S15 may be carried out with a known NC machine tool. Material of the denture base 21 used here is preferably hard material such as general base resin material (acrylic resin), resin material containing filler and crosslinker or the like, engineering plastic, metal and sintered ceramics. Forming the denture base 21 of such material makes it possible to perform cutting properly and accurately.

Step S15a is a step of fitting the artificial teeth 12a onto the denture base 21. The artificial teeth 12a are arranged on the recess parts 21b of the denture base 21 and fixed with an adhesive. Here, the artificial teeth 12a are in a state where occlusion thereof is accurately adjusted since being artificial teeth which are used for the try-in device 10 and a state of occlusion of which has been properly adjusted already in step S20 with the occlusal surfaces 12b or by moving.

In step S15b, finish polishing is carried out on a denture obtained in step S15a to finally obtain the denture 20.

As described above, according to the producing method S10, the artificial teeth 12a of the try-in device 10 are ground to adjust a state of occlusion and these artificial teeth 12a may be used as the artificial teeth 23 of the denture 20 as they are. Thus, due to commonly-available artificial teeth that are prepared in advance, the try-in device can be easily made without CAD/CAM and also, a state of adjusted occlusion is accurately reflected on the denture 20, which makes it possible to obtain a state of good occlusion.

Next, the method S20 for producing the try-in device 10 and the denture 20 according to the second embodiment (which may be referred to as "producing method S20") will be described. While described with an example of using the design apparatus 30 here for understandability as well, the producing method S20 is not limited thereto and can be carried out with another apparatus as long as such an apparatus can realize the method including the spirit below.

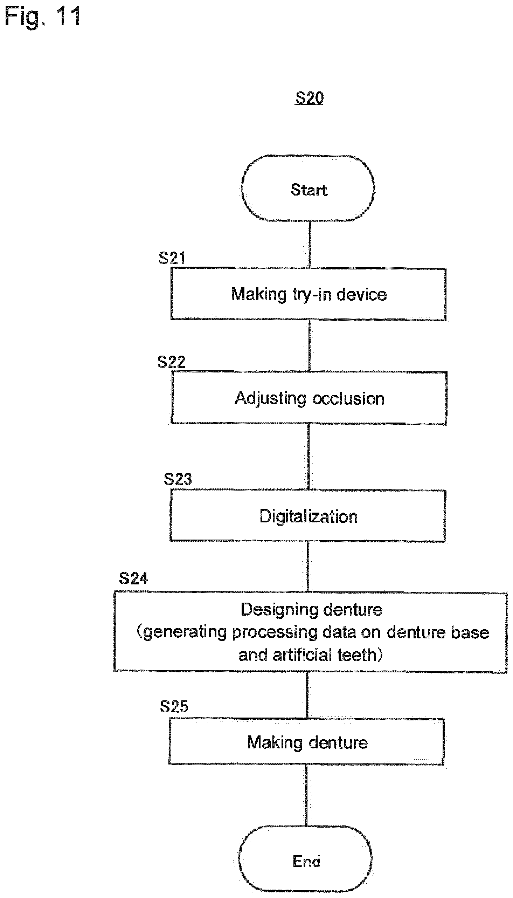

Fig. 11 shows a flow of the producing method S20. As can be seen from this, the producing method S20 includes step S21 of making a try-in device, step S22 of adjusting occlusion, step S23 of digitalization, step S24 of designing a denture and step S25 of making a denture. Hereinafter each step will be described.

This embodiment is an example of using other artificial teeth that are made based on results of adjustment of occlusion using the try-in device 10, for the artificial teeth 23 to be used for the denture 20.

Step S21 is a step of making the try-in device 10. A plaster cast of an impression that is obtained by impression taking is made and a bite plate that is to be a try-in base is made using a base plate and wax on the plaster cast. The artificial teeth 12a are arranged on this bite plate made of wax to make the try-in device 10.

Step S22 is a step of adjusting occlusion as well as step S12. That is, the try-in device 10 obtained in step S21 is arranged in a patient's oral cavity or an articulator to adjust occlusion. Occlusion is adjusted as usual. For example, occlusion is adjusted by grinding the occlusal surfaces 12b or by moving the artificial teeth 12a.

Step S23 is a step of obtaining CAD data of the try-in device 10 from the try-in device 10 obtained in step S22, for which occlusion is adjusted, as well as step S13. A method of obtaining CAD data can be carried out with a known apparatus. Examples thereof include a three-dimensional optical scanner.

Step S24 is a step of determining a shape of the denture 20 to be made based on the data obtained in step S23. Specifically, a shape of a denture is determined on data according to the data obtained in step S23 and databases stored in the design apparatus 30.

In this embodiment, concerning the embedment of the denture base 21, the date obtained in step S23 is used to be data of the denture base 21.

On the other hand, as for the embedment of the artificial teeth 23, the data obtained in S23 from the artificial teeth 12a is superimposed on data on artificial teeth which is saved in the database of shapes of artificial teeth 35b (see Fig. 8). Then, the data on artificial teeth from the database is deformed based on the data from the artificial teeth 12a to generate processing data of artificial teeth having a shape of the artificial teeth 23 for the denture 20. According to this, material of artificial teeth can be selected according to diagnosis information and a treatment stage.

At this time, a position of artificial teeth is determined on the basis of side faces of an artificial teeth part (unadjusted part) on the data obtained in step S23 and for this, a shape of a connection part (recess parts 21b, socket part) of the artificial teeth to a denture base is determined at the same time.

In step S24, the data on the denture base 21 and the data on the artificial teeth 23 are separated from the determined data on a denture as well as step S14, processing data for each thereof is generated and these processing data are outputted to step S25 of making a denture (machine tool).

Each arithmetic operation carried out in step S24 in this embodiment is executed in the design apparatus 30. That is, the arithmetic means 33 executes arithmetic operations according to the program 35a that is saved in the memory device 35 included in the design apparatus 30 to progress each arithmetic operation carried out in step S24 in this embodiment. Therefore, varieties of shapes treated here exist as data and are treated as data.

Step S25 is a step of receiving the processing data for a denture and the processing data on artificial teeth which are outputted in step S24 to a machine tool, cutting out each of them and finishing a denture by, for example, cutting out as the denture 20 and the artificial teeth 23.

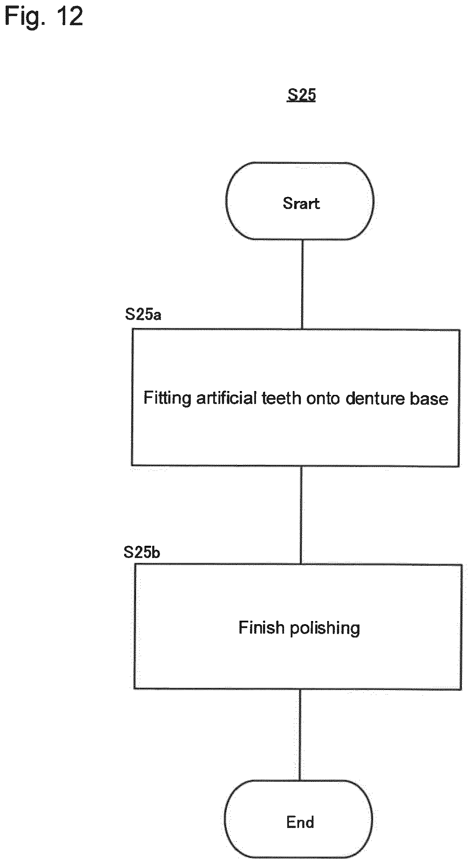

Fig. 12 shows a flow of step S25. As can be seen from Fig. 12, step S25 includes step S25a of fitting the artificial teeth 23 onto the denture base 21 and step S25b of finish polishing.

Here, a known one may be used as the machine tool without any specific limitation and step S25 may be carried out with a known NC machine tool.

Step S25a is a step of fitting the artificial teeth 23 onto the denture base 21. The artificial teeth 23 are arranged on the recess parts 21b of the denture base 21 and fixed with an adhesive.

In step S25b, finish polishing is carried out on a denture obtained in step S25a to finally obtain the denture 20.

As described above, according to the producing method S20, the artificial teeth 12a of the try-in device 10 are ground to adjust a state of occlusion and using these artificial teeth 12a, the artificial teeth 23 of the denture 20 are made. Thus, since the artificial teeth of the try-in device are commonly-available artificial teeth that are prepared in advance, the try-in device can be easily made without CAD/CAM, and also a state of adjusted occlusion is accurately reflected on the denture 20, which makes it possible to obtain a state of good occlusion.

### Reference Signs List

10 try-in device
11 try-in base
12 dentition part
12a artificial teeth
12b occlusal surfaces
20 denture
21 denture base
21a ridge
21b recess part
22 artificial dentition
23 artificial teeth

## Claims

1. A try-in device to adjust a state of occlusion of a denture, the try-in device comprising:
a try-in base; and
artificial teeth that are arranged on the try-in base,
wherein the artificial teeth are commonly-available artificial teeth.

2. A method for producing a denture, the method comprising:
making the try-in device according to claim 1;
obtaining digital data on a shape of the try-in device after occlusion of the artificial teeth of the try-in device is adjusted;
making a denture base based on the digital data; and
arranging the artificial teeth arranged on the try-in device, on the denture base.

3. A method for producing a denture, the method comprising:
making the try-in device according to claim 1;
obtaining digital data on a shape of the try-in device after occlusion of the artificial teeth of the try-in device is adjusted;
making a denture base and other artificial teeth based on the digital data; and
arranging the other artificial teeth on the denture base.
